# EUROPEAN PATENT APPLICATION

(11) **EP 2 716 995 A1**
(43) Date of publication of application: **09.04.2014**
(21) Application number: 11866864.9
(22) Date of filing: 27.05.2011
(51) Int. Cl.: F24J 2/46, F24J 2/04, F24J 2/07, F24J 2/24

(54) **METHOD OF DRAINING HEAT-TRANSFER OIL IN A SOLAR POWER PLANT, AND EQUIPMENT FOR DRAINING, STORING AND REPLENISHING HEAT-TRANSFER OIL IN ORDER TO IMPLEMENT SAID METHOD**

(71) Applicant: Logistica Y Acondicionamientos Industriales, S.A.U., 46015 Valencia (ES)
(72) Inventor: LACALLE BAYO, Jesús, E-46015 Valencia (ES)
(74) Representative: Sanz-Bermell Martinez, Alejandro
(86) International application number: PCT/ES2011/070385
(87) International publication number: WO 2012/164105

(57) **Abstract**

The invention relates to a method of draining heat-transfer oil in a solar power plant, and to equipment for draining, storing and repositioning heat-transfer oil in order to implement said method. The method includes filling auxiliary ducts, flushing the oil from the solar power plant loop, cooling the outgoing oil and extracting the oil by suction; replenishing includes filling the loop by impulsion and emptying the auxiliary ducts by aspiration. The installation includes an oil tank (7); a pumping assembly (6); an oil cooler (5); communication ducts between same; a depressor or aspiration assembly (8); an assembly of ducts for emptying (3) the loop of the installation, forming a closed loop; and an assembly of filling ducts (4), forming a closed loop.

## Description

A method for draining thermal oil at a solar thermal plant, and an installation for drainage, storage and replacement of thermal oil for implementing this method.

This invention covers a method for draining thermal oil at a solar thermal plant, in which the oil is withdrawn from this even at high temperatures, stored in appropriate isolation and temperature conditions, and then returned into the loop from which this was withdrawn or to another line or tank of the installation at the plant. This also refers to an installation that can be used for cleaning circuits through which fluids such as thermal oil circulate, for example at a solar thermal plant.

Thermal fluids have a high environmental risk through toxicity, and at high temperatures also involve a high risk of ignition or explosion.

In particular, a solar thermal installation comprises a set of collection circuits through which thermal oil circulates. This thermal oil reaches a temperature of almost 400°. Solar thermal installations also undergo deterioration and breakdowns, sometimes stemming from the high corrosiveness of oil and/or of its contamination, which may have the effect of the pressure in the installations rising, placing these at risk of breakage, for which reason there is also a risk of auto-ignition of oil when its temperature is high in the presence of oxygen, for example, the oxygen in the air.

Furthermore, since the oil in the installation is at very high temperatures, its treatment requires a prior cooling.

One purpose of this invention is thus to propose an installation for the removal, storage and replacement of this oil, enabling performing the repair or processes for maintenance and cleaning of the lines and equipment that has been drained in order to keep part of this installation running, minimising energy losses, and a method for carrying this out.

### State of the art

A vehicle made by the Voith company, fitted with a tank in which the oil is collected at a high temperature, and a pumping device for its reinsertion in the installation, is known to be used. The oil is allowed to cool in this tank until this is taken back into the installation at an appropriate temperature of around 80°. The treatment times are nevertheless very long due to the high temperature, and there is also a significant risk of deflagration. The tank works under pressure and is filled with nitrogen to prevent any presence of air. The installation is unloaded by means of rinsing by injecting nitrogen, to prevent contact with air, which also entails high costs as well as not providing any total guarantee as to the lack of oxygen through not being able to detect nitrogen leaks.

### Description of the invention

The invention being proposed consists of an installation for draining, storing and replacing the thermal oil at a solar thermal plant, normally a transportable installation, comprising the following items;
- An oil tank; the oil is heat-insulated and comprises heating means, for example by means of resistances; this is appropriate for handling this oil which is at a temperature of around 80°, at which the risk of ignition is non-existent (it has to be over 113°), and never under 12°, a temperature at which this solidifies and it becomes impossible to handle;
- A pumping set consisting of at least one impeller pump which takes the oil from the tank and leads this to the following parts of the installation; given that the pumps are mechanically the weakest point of the installation, two pumps have been designed in parallel, one or both being able to run; one of these can however be dismantled for repair or replacement, while the installation is running with the other one; a larger number of these is also possible, though less preferable;
- An oil cooler; since the oil in the loop is at a high temperature, close to 400°, and cannot be treated at this temperature, apart from the danger of inflammation, there is a set of heat exchangers, normally but not necessarily arranged in series, enabling the temperature to be sufficiently reduced (normally down to roughly 80° and always under 100°) to allow the treatment and the proximity of the operators to the tank and other zones without excessive exposure to heat or to the risk of explosion;
- A depression or suction set; this depression set is used for emptying one of the lines of the conduits forming the loop of the solar plant or of the auxiliary conduits comprising the installation according to the invention; the depression or suction set is provided with the filters required to prevent any contaminating substances from being forced outside.
- Communication conduits between the pumping set and the oil tank.
- Communication conduits between the oil cooler and the oil tank.
- Communication conduits between the depression or suction set and the oil tank.
- A set of conduits for emptying the loop of the solar plant forming in turn a closed loop, along with the oil cooler, the tank and the pumping set.
- At least one conduit for filling the loop of the solar plant, forming in turn a closed loop along with the oil cooler, the tank and the pump casing.
- At least one intake for air from the exterior; there will normally be air intakes in the areas for connection with the loop of the installation and between the tank and the pumping device;
- There are also additional connections for linking the different conduits.

The drainage method involves the following operations:
1. First of all the auxiliary conduits for emptying and filling the loop of the solar plant are filled; for this purpose, the oil from the tank is driven through said auxiliary conduits after making the relevant connections; the state of the valves is then monitored; the filling can be done in a single phase or in different phases for the different loops;
2. Then the oil from the loop of the solar thermal plant is rinsed by means of driving the pumping set; normally one of the emptying conduits will be inactive, with its valves closed; the rinse goes through the oil cooler; for this reason the oil which is impelled is cold (not over 80°), and the temperature of the oil extracted is under this temperature; in a rinsing cycle the oil is at a temperature at which work can be done and this can be stored with no risks for people or for the environment;
3. By activating the depression or suction assembly the oil is sucked from the loop, with an air intake being open to fill the conduit as the oil is withdrawn (there being no risk of contact with the air through the oil being at 80°); the oil being sucked first goes through the oil cooler before reaching the tank; in this phase the extraction from the loop is done through one of the branches of each closed loop of the conduits for draining and filling the loop of the installation, the other branch of each of these being full;
4. When the loop of the installation has to be filled, the loop of the solar plant is filled by being impelled by the pump assembly, taking the oil from the oil tank; the longer the passage of the oil, the greater the rinsing of any bubbles that might be left in the installation;
5. The conduits of the installation of the invention are drained by means of suction by the depression or suction set, opening all the valves giving on to the exterior.

Each of the stages involves the relevant opening/closing of the valves, as will be stated below and the activation of the relevant impelling, cooling and/or suction devices.

### Short description of the drawings

In order to illustrate the following explanation better, five sheets of drawings are adjoined to this descriptive report, in which five figures represent the essence of this invention and in which:

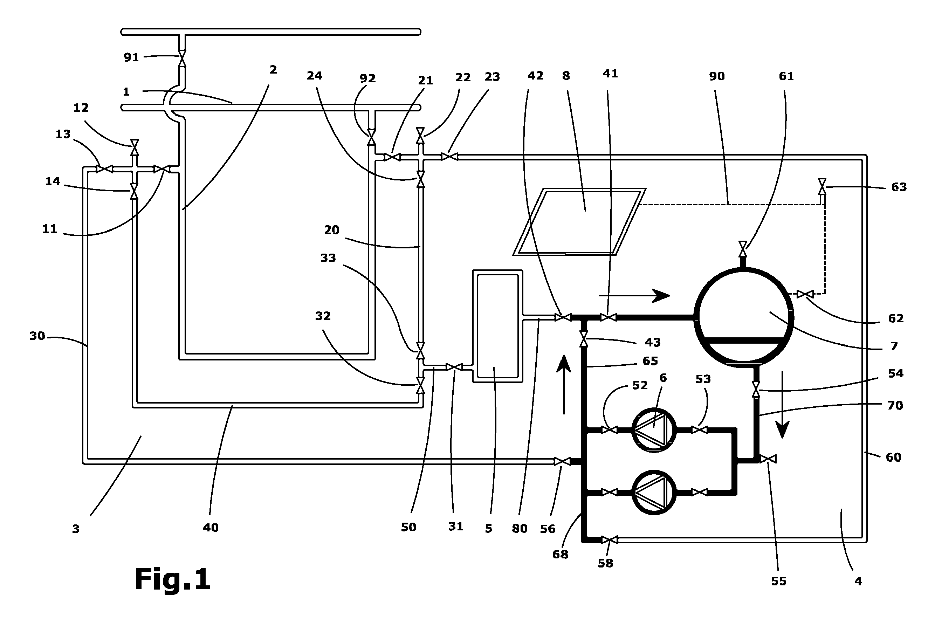

- Figure 1: shows a schematic view of the installation of the invention running in a first phase of the process in which the auxiliary conduits for the loop forming the communication conduits between the oil tank and the pumping device are filled with oil;

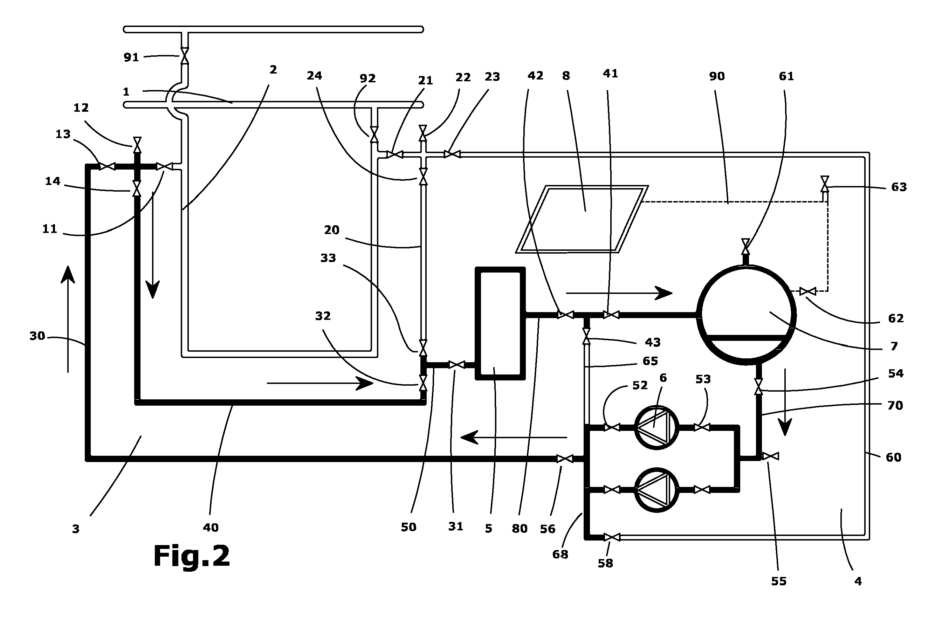

- Figure 2: shows a schematic view of the installation of the invention running in a first phase of the process in which the auxiliary conduits of the loop forming the drainage conduits are filled with oil;

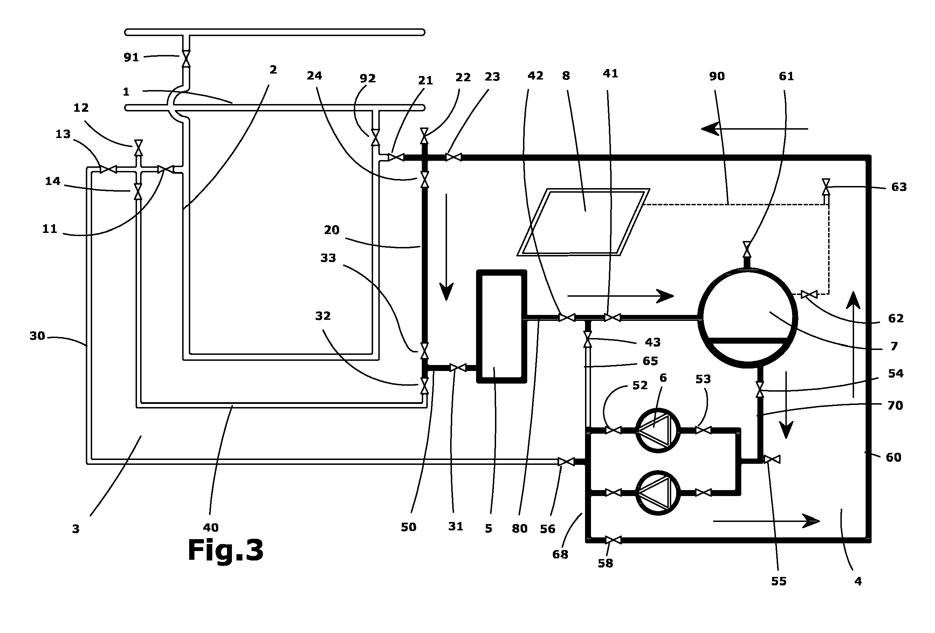

- Figure 3: shows a schematic view of the installation of the invention running in a first phase of the process in which the auxiliary conduits of the loop forming the filling conduits are filled with oil; the operations of Figures 1, 2 and 3 can be performed simultaneously in the same operation or sequentially;

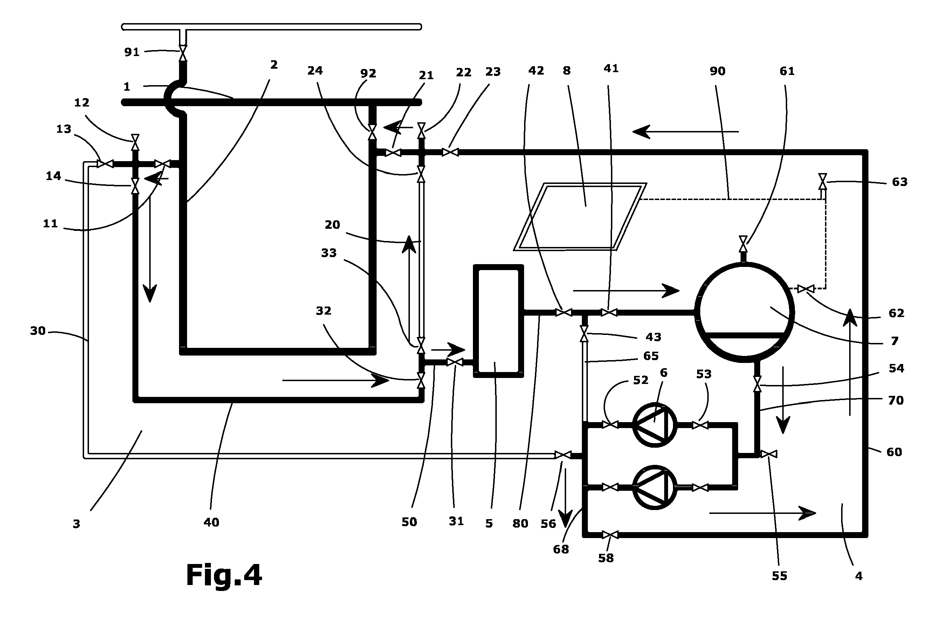

- Figure 4: shows the schematic view of the installation of Figures 1 to 3, but running in a second phase of the process in which there is a rinsing of the content of the loop of the installation in which the oil to be treated is contained;

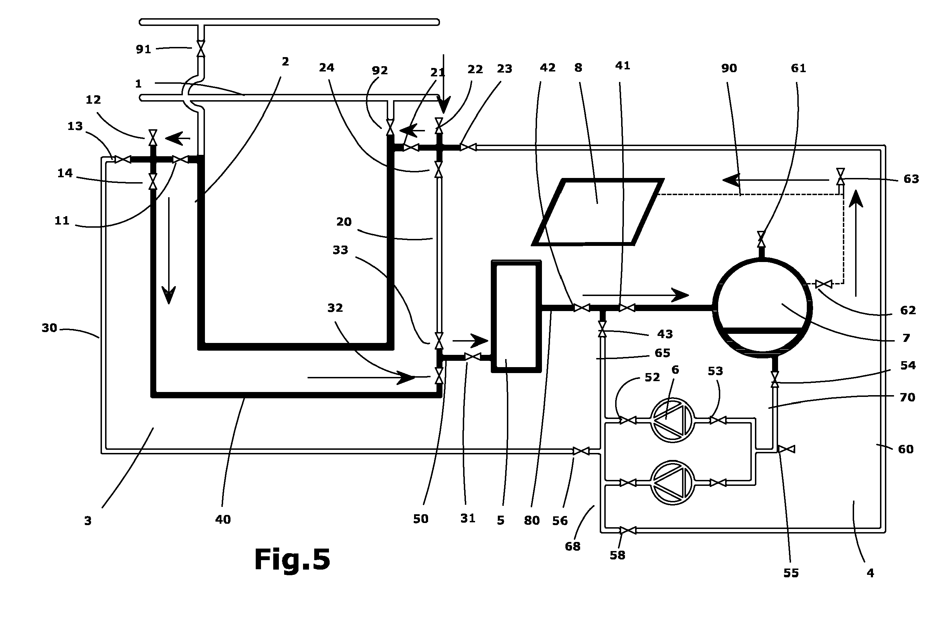

- Figure 5: shows the schematic view of the installation of Figures 1 to 4, but running in a third phase of the process, in which the loop of the installation is emptied by applying forced suction;

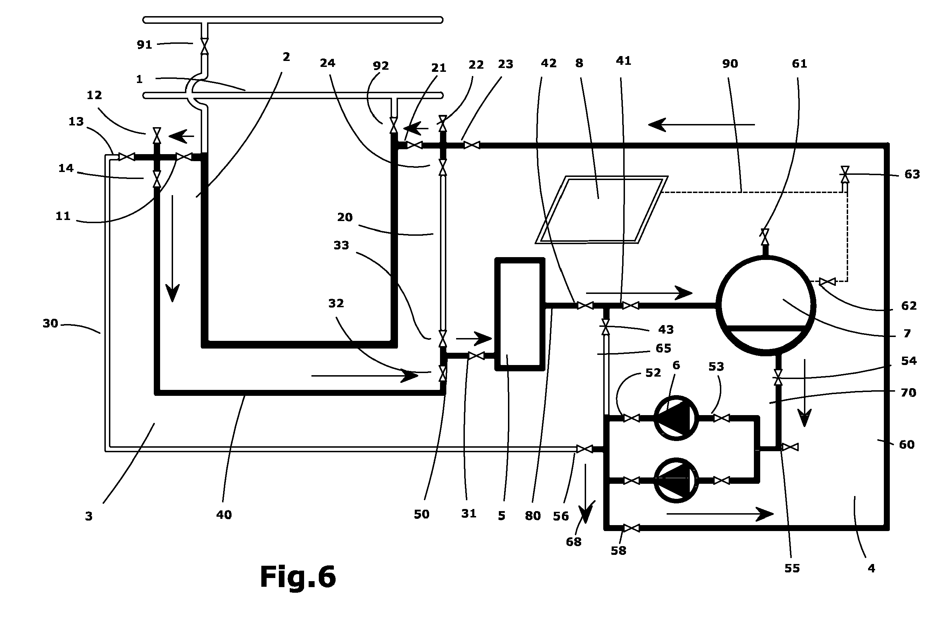

- Figure 6: shows the schematic view of the installation of Figures 1 to 5, but running in a fourth phase of the process, in which the loop of the installation is filled by applying an impulsion force; and

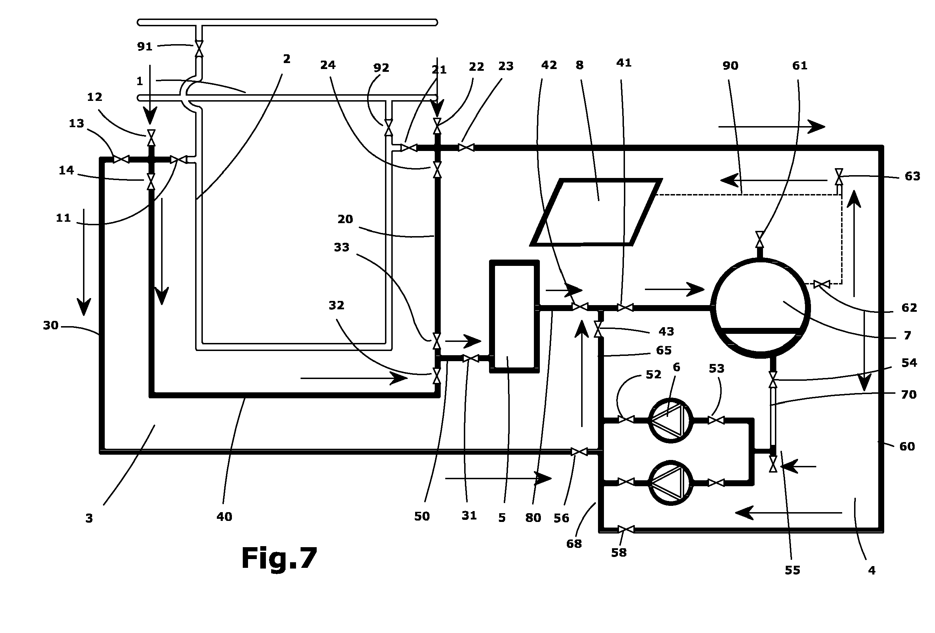

- Figure 7: shows the schematic view of the installation of Figures 1 to 6, but running in a fifth phase of the process, in which the conduits, normally portable, which have been used for carrying out the previous processes, are emptied.

### Description of the preferential embodiment of the invention

In the explanation given below, reference is made to "conduit" and "valve" identified with their numerical references, as indicated in the figures.

As has been briefly described above, an installation for draining, storing and replacing thermal oil (draining a loop of a solar thermal installation and filling this) is described. The solar thermal installation comprises general conduits (1) and, isolated by means of valves (91, 92), a loop of the installation (2) corresponding to a group of solar collectors arranged in series:
- An oil tank (7); this oil tank is connected to conduits (80, 70) and isolated by means of relevant valves (41, 54) respectively set in said conduits; the tank comprises an atmospheric intake by means of a valve (61);
- A pumping set (6); as has already been described this can be comprised of a single pump, but in the preferred embodiment two pumps are set in parallel; the pumping set is isolated by means of relevant valves (53, 52) respectively set upstream and downstream of each pump;
- A conduit (70) communicating the oil tank (7) and the pumping set (6); apart from the valve (54) for closing the tank, said conduit is provided with a valve (55) with an atmospheric intake;
- An oil cooler (5); connected to conduits (51, 80), and isolated by valves (31 and 42) respectively;
- A conduit (80) communicating the oil cooler (5) with the oil tank (7);
- A conduit (65) communicating the outlet of the pumping set (6) with the conduit (80), and a conduit (68) communicating the outlet of the pumping set (6) with a conduit (60); both conduits (65, 68) can be combined in only one, provided with a valve (43) in the zone for connection with the conduit (80) and a valve (58) with the conduit (60);
- A depression or suction set (8) communicating with the oil tank (7) by means of a conduit (90), provided with a valve (62), for isolation, and an atmospheric intake valve (63);
- A conduit (20) provided with valves (24, 33);
- A conduit (51) which joins the oil cooler (5) with conduits (40 and 20);
- A set of drainage conduits (3) for the loop of the installation, forming a closed loop comprising a conduit (30), conduit (40), conduit (51), conduit (80), conduit (70) and conduit (68); this set of drainage conduits comprises in the zone for connection with the drainage outlet of the loop of the installation a set of valves (11, 12, 13, 14), at the connection with the conduit (51) a valve (32), and at the connection with conduit (68) a valve (56);
- A set of filling conduits (4), forming a closed loop consisting of conduit (20), conduit (51), conduit (80), conduit (70), conduit (68) and conduit (60); said set of filling conduits (4) comprises at the zone for connection with the filling intake of the loop of the installation a set of valves (21, 22, 23, 24), at the connection with the conduit (51) a valve (32), and at the connection with the conduit (68) a valve (58).

Different stages are involved in carrying out the drainage operation: A first phase consists in filling the different conduits; this takes place simultaneously or sequentially. Initially one has to proceed to fill the interior loop made up of conduits (80, 70, and 65); to this end valves (53, 52, 43, 42, 54) are left open and the others are closed. Valve (61) can be left open to ensure that the pressure in the tank is at atmospheric level. The temperature is that of the oil in the tank, not over 80°C, nor under 12°C. The other valves will remain closed. The pumping device is activated and oil is made to circulate through the conduits (65, 80 and 70).

To fill the set of drainage conduits (3) valves (54, 53, 52, 56, 13, 14, 32, 31, 42, and 41) have to be open. As stated for the interior loop, valve (61) can be left open. The oil will thus circulate through conduits (70, 30, 14, 50, and 80) driven by the pumping set (6).

Filling the set of filling conduits (4) requires valves (23, 24, 33, 31, 42, 41, 54, 53, 52 and 58) to be open, and the rest, except for valve (61), as stated above, to be closed. The oil will thus circulate through conduits 70, 68, 60, 20, 50, and 80.

If all the conduits are filled simultaneously, valves (13, 14, 56, 32, 33, 31, 42, 41, 54, 53, 52, 58, 23 and 24) will have to be left open. Valve (61) can also be open.

During the filling stage, given that the oil is not hot, it will not be necessary for the oil cooler to be active.

In a second stage a rinsing of the loop of the installation (2) will be performed with cold oil (at the temperature at which this is found in the oil tank (7). To this end valves (11 and 21) which are connected with the loop of the installation are opened, and valves 14, 32, 31, 42, 41, 54, 53, 52, 58, and 23 should also be open. The other valves, except for valve (61) will be closed, the oil circulating through conduits (68, 60, 40, 50, 80, 70). Since the oil which is absorbed is hot, when this goes through the oil cooler (5), this will be active, dissipating the heat into the atmosphere, and lowering the oil temperature to around 80°C. This means it is not dangerous when it reaches the tank and can be treated at atmospheric pressure and in the presence of air. The pumps are not subject to excessive heat either.

The following phase, three, consists in emptying the loop. For this purpose valves (22, 21, 11, 14, 32, 31, 42, 41, 62) will be open and valve (61) will be closed and the depression or suction set will come into operation (8). The oil in the loop is now cold and by suction the oil will be replaced by air which comes in through valve (22).

In these conditions one can proceed to handle and repair the solar installation.

Then the loop of the installation (2) is filled. To do this valves (11, 14, 32, 31, 42, 41, 54, 53, 52, 58, 23, and 21) are left open and valve (61) can be open. The air that was in the loop of the installation (2) thus goes through the conduits up to the tank (7), and if necessary to the exterior through the valve (61). After filling the loop valves (11, 12) are closed and the installation can now be used.

The set of conduits then has to be collected, for which purpose the oil has to be taken to the oil tank (7). This is done by connecting the depression or suction set (8) and opening all the valves, even the ones for atmospheric intake (12, 22, 55). Like the filling, the drainage can be done by loops by closing the relevant valves that are not involved in draining the relevant loop.

The valves are normally electronically operated electric valves and a control system is designed for opening and closing the valves in groups according to the phase or operation to be performed.

The set of apparatus is preferably mounted on the platform of a vehicle or the trailer of a vehicle.

## Claims

1. A method for draining the thermal oil at a solar thermal plant, which includes unloading and loading at least one loop of the installation (2), characterised because the unloading phase comprises the following operations:
• Filling auxiliary conduits for emptying and filling the loop of the solar thermal plant (2); the auxiliary conduits comprise:
o conduits for communication between the tank, the pumping set and the oil cooler;
o a set of emptying conduits (3); and
o a set of filling conduits (4);
• rinsing the oil from the loop of the solar thermal plant by driving oil from an external oil tank into this loop, by means of a pumping set through said auxiliary conduits for emptying and filling the solar thermal plant;
• cooling the oil from the loop of the solar thermal plant by means of its passage through an oil cooler until this reaches a temperature of around 80°, and returning the cooled oil to the oil tank;
• extracting the oil from the loop of the solar thermal plant through the action of a depression or suction set, and an external air intake which leads the oil to the oil tank.

2. A method for draining the thermal oil at a solar thermal plant, according to claim 1, **characterised in that** in the stage for filling the auxiliary conduits for emptying and filling the loop of the solar thermal plant (2), valves (11, 21) for connecting this loop with the solar thermal plant are closed.

3. A method for draining the thermal oil at a solar thermal plant, according to either of claims 1 to 2, **characterised in that** the auxiliary conduits are filled sequentially in:
• the conduits for communication between the tank, the pumping set and the oil cooler;
• the set of emptying conduits (3); and
• the set of filling conduits (4);
by opening and closing the relevant valves.

4. A method for draining the thermal oil at a solar thermal plant, according to any of claims 1 to 3, **characterised in that** in the rinsing stage one of the branches of the emptying conduit set (3) and/or of the filling conduit set (4) is inactive by closing the appropriate valves.

5. A method for draining the thermal oil at a solar thermal plant, according to any of claims 1 to 4, **characterised in that** in the phase for extracting the oil from the loop of the solar thermal plant there is at least one exterior air intake valve (22) in open status.

6. A method for draining the thermal oil at a solar thermal plant, according to any of claims 1 to 5, **characterised in that** this also comprises the following operations:
• Filling the loop of the installation, by impelling by means of the pumping set through at least one of the filling conduits, taking the oil from the oil tank, and returning through at least one of the emptying conduits;
• Closing valves (11, 21) for connection between the auxiliary conduits and the loop of the solar thermal installation; and
• Emptying the conduits of the installation of the invention by suction by means of the depression or suction set, with all the valves communicating with the exterior opening.

7. An installation for draining, storing and replacing thermal oil, **characterised by** comprising:
• An oil tank (7); this oil tank is connected to conduits (80, 70) and isolated by appropriate valves (41, 54) respectively set in said conduits, and comprises an atmospheric intake by means of a valve (61);
• Un pumping set (6), isolated by means of the proper valves (53, 52) respectively set upstream and downstream of each pump;
• A conduit (70) communicating with the oil tank (7) and the pumping set (6);
• An oil cooler (5) connected to conduits (51, 80), and isolated by valves (31 and 42) respectively;
• A conduit (80) communicating the oil cooler (5) with the oil tank (7);
• A conduit (65) communicating the outlet of the pumping set (6) with conduit (80), and a conduit (68) communicating the outlet of the pumping set (6) with a conduit (60);
• A depression or suction set (8) communicating with the oil tank (7) by means of a conduit (90), provided with an isolation valve (62);
• A conduit (20) provided with valves (24, 33);
• A conduit (51) which joins the oil cooler (5) with conduits (40 and 20);
• A set of emptying conduits (3) for the loop of the installation, forming a closed loop consisting of a conduit (30), conduit (40), conduit (51), conduit (80), conduit (70) and conduit (68); this set of emptying conduits comprises in the area where it joins the emptying outlet of the loop of the installation a set de valves (12, 13, 14), at the connection with the conduit (51) a valve (32), and at the connection with the conduit (68) a valve (56), having an atmospheric intake by means of a valve (11);
• A set of filling conduits (4), forming a closed loop consisting of conduit (20), conduit (51), conduit (80), conduit (70), conduit (68) and conduit (60); this set of filling conduits (4) comprises in the area where it joins the filling inlet of the loop of the installation a set de valves (22, 23, 24), at the connection with the conduit (51) a valve (32), and at the connection with the conduit (68) a valve (58), having an atmospheric intake by means of a valve (21).

8. An installation for draining, storing and replacing thermal oil, according to claim 7, **characterised by** the oil tank (7) being heat-insulated and being provided with heating resistances.

9. An installation for draining, storing and replacing thermal oil, according to either of claims 7 to 8, **characterised in that** the pumping set is formed of two pumps set in parallel.

10. An installation for draining, storing and replacing thermal oil, according to any of claims 7 to 9, **characterised in that** the conduit (70) is provided with an atmospheric intake valve (55).

11. An installation for draining, storing and replacing thermal oil, according to any of claims 7 to 10, **characterised in that** the conduits (65, 68) can be combined in a single one provided with a valve (43) in the area for connection with the conduit (80) and a valve (58) with the conduit (60).

12. An installation for draining, storing and replacing thermal oil, according to any of claims 7 to 11, **characterised in that** the valves are electronically operated electric valves.

13. - An installation for draining, storing and replacing thermal oil, according to claim 12, **characterised in that** this comprises a control body for opening and closing the valves in accordance with the operating phase.

14. An installation for draining, storing and replacing thermal oil, according to any of claims 7 to 13, **characterised in that** the set of apparatus is located on the platform of a vehicle or a trailer of a vehicle.
